# EUROPEAN PATENT APPLICATION

(11) **EP 1 202 473 A1**
(43) Date of publication of application: **02.05.2002**
(21) Application number: 01934496.9
(22) Date of filing: 01.06.2001
(51) Int. Cl.: H04B 7/26

(54) **RADIO COMMUNICATION SYSTEM AND COMMUNICATION TERMINAL APPARATUS USED THEREIN**

(30) Priority: 06.06.2000 JP 2000169442
(71) Applicant: MATSUSHITA ELECTRIC INDUSTRIAL CO., LTD., Kadoma-shi, Osaka 571-8501 (JP)
(72) Inventor: MIYA, Kazuyuki, Kawasaki-shi, Kanagawa 215-0021 (JP)
(74) Representative: Grünecker, Kinkeldey, Stockmair & Schwanhäusser Anwaltssozietät
(86) International application number: JP0104651
(87) International publication number: WO0195524

(57) **Abstract**

An FDD system speech signal transmitted from a mobile station (MS) 201 which is a communication terminal is received by a base station (BS) 202 and undergoes predetermined processing, and the obtained received data is sent to a mobile switching center (MSC) 204 via a radio network controller 203. In the MSC, data from a number of base stations is bundled and sent to a telephone network 207. On the other hand, a TDD system high-speed packet transmitted from the mobile station (MS) 201 is received by a base station (BS) 205 and undergoes predetermined processing, and the obtained received data is routed by a router 206 and sent to an IP (Internet Protocol) packet network 208.

## Description

### Technical Field

The present invention relates to a communication terminal apparatus used in a digital radio communication system.

### Background Art

With recent advances in Internet-related technologies, various kinds of services such as music distribution have come to be offered via the Internet. With such services, downlink transmission volumes are extremely large. In order to implement a service that has a large downlink transmission volume, great expectations are held for high-speed packet transmission on the downlink, and various technological developments have been made regarding such downlink high-speed packet transmission.

In a cellular system, a system called HDR (High Data Rate) has been proposed as a high-speed packet radio transmission system. This system uses the same bandwidth (1.25 MHz) on both uplink and downlink as the conventional CDMA (Code Division Multiple Access) system called IS-95. This HDR system is separated from an IS-95 system that accommodates speech and low-speed packets in a radio section according to frequency, and furthermore is separated from the IS-95 system even in the backbone (infrastructure), and is specialized for Internet access.

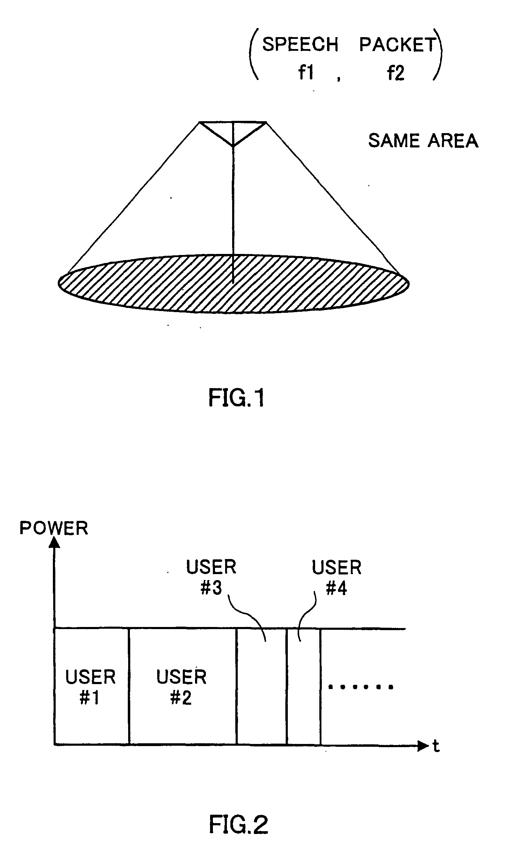

In an HDR system, a radio transmission method that does not perform transmission power control is used, and by always performing transmission at maximum power, high-speed packet transmission service is implemented in the same cover area as IS-95 providing slow-rate speech service. Thus, in this system, as shown in FIG.1, a cell and antenna are shared by IS-95 (speech service: f1) and the HDR system (high-speed packet transmission service: f2).

Generally speaking, a greater transmission delay is permissible for packets than for speech, and therefore with HDR, switching is carried out by means of hard handover, and soft handover is not used. However, even when hard handover is carried out, channels must be maintained up to the edge of the cover area to prevent holes in the service area-that is, to enable communication anywhere.

As high-speed packets have a high symbol rate, the necessary transmission power is high compared with slow-rate channels. Therefore, maintaining a high-speed packet channel up to the edge of the cover area requires considerable transmission power. Consequently, interference is greater for high-speed packet channels than for other channels, and as a result system capacity is reduced.

In order to solve this problem, transmission is always performed at maximum power in an HDR system, and the assignment time and transmission rate are changed according to channel conditions . That is to say, as shown in FIG.2, although transmission is performed at the same maximum power for each user, the assignment time and transmission rate are changed according to the channel conditions of individual users. In this way, channels are maintained in an HDR system by lowering the transmission rate (average throughput) at the edge of the cover area.

As described above, in an HDR system, a high transmission rate (throughput) can be assured in the immediate vicinity of the base station, but there is a problem of the transmission rate decreasing as the edge of the cover area is approached. This is because of the characteristic whereby cells and antennas of both systems can be shared by securing the same cover area as an IS-95 system that performs speech service.

Moreover, in an HDR system, as the number of channels accommodated in the same area increases, it becomes necessary to lower the average throughput of each channel among the limited carrier frequencies. Conversely, in order to maintain the average throughput of each channel, it is not possible to accommodate so many users in the limited carrier frequencies, and so the number of channels (users) must be restricted.

### Disclosure of Invention

It is an object of the present invention to provide a radio communication system and a communication terminal apparatus used therein that make it possible, in a system that includes channels with a high transmission rate, to prevent a decrease in the transmission rate (throughput) at the edge of the cover area, and also to improve spectral efficiency and increase the number of accommodated channels without lowering average throughput.

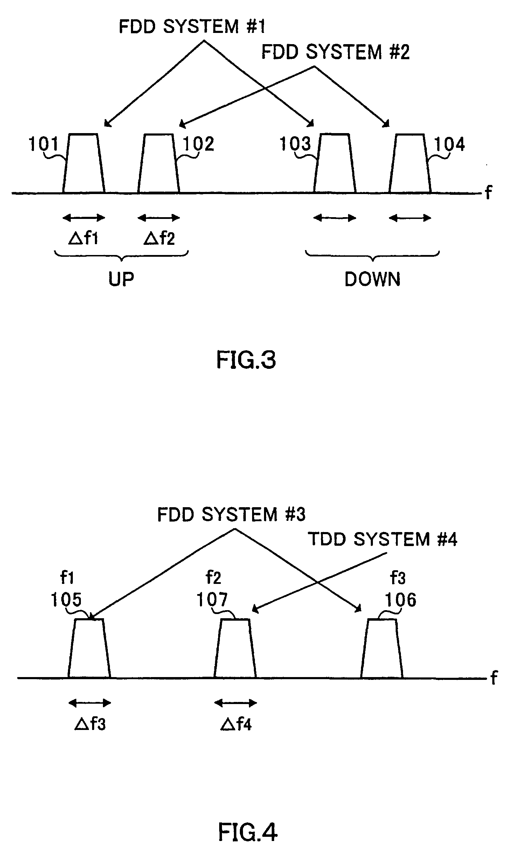

In the above-described IS-95 system and HDR system, the radio access method is FDD in both cases, and there is asymmetry in terms of time domain and frequency bandwidth in the up/downlinks. To be specific, a pair of frequency bands (paired bands ) is secured in the uplink and downlink as shown in FIG. 3. That is, FDD system #1 (an IS-95 system, for example) secures an uplink frequency band 101 and downlink frequency band 103 as a pair, and FDD system #2 (an HDR system, for example) secures an uplink frequency band 102 and downlink frequency band 104 as a pair. Frequency bandwidths .f1 and .f2 are the same in the uplink and the downlink.

In an HDR system, even with an FDD method that has asymmetry in terms of up/downlink time domain and frequency bandwidth, it is possible to transmit at a faster rate, and to implement asymmetrical transmission on the up/downlinks, by changing individual methods such as the up/downlink modulation method, frame configuration, channel configuration, and channel multiplexing method.

Meanwhile, as regards the W-CDMA (Wideband-Code Division Multiple Access) FDD (Frequency Division Duplex) system and TDD (Time Division Duplex) system for which standardization is currently progressing as IMT-2000 systems, investigation is proceeding on the premise of basically being able to offer the same services with both, and services required for an IMT-2000 system can be offered by an FDD system or TDD system independently. In this case, since there are no major differences in terms of the services provided by both systems, if a particular provider constructs both systems, how both systems are to be operated efficiently will present a problem.

The frequency band set for IMT-2000 system use by the ITU includes a frequency band (2010 to 2025 MHz) in which it is difficult to secure paired bands for an FDD system, and therefore investigation has been undertaken into a system whereby that frequency band is envisaged as being for TDD system use and is complemented by traffic sharing. By this means, it should be possible to make efficient use of the IMT-2000 frequency band and also operate both an FDD system and a TDD system efficiently.

Also, a TDD system employs ping-pong transmission whereby the same frequency band is used on the uplink and downlink. Although a TDD system uses the same frequency band on the uplink and downlink, asymmetrical transmission can easily be achieved, if only in the time domain, by making the up/downlink time ratio (number of slots) asymmetrical.

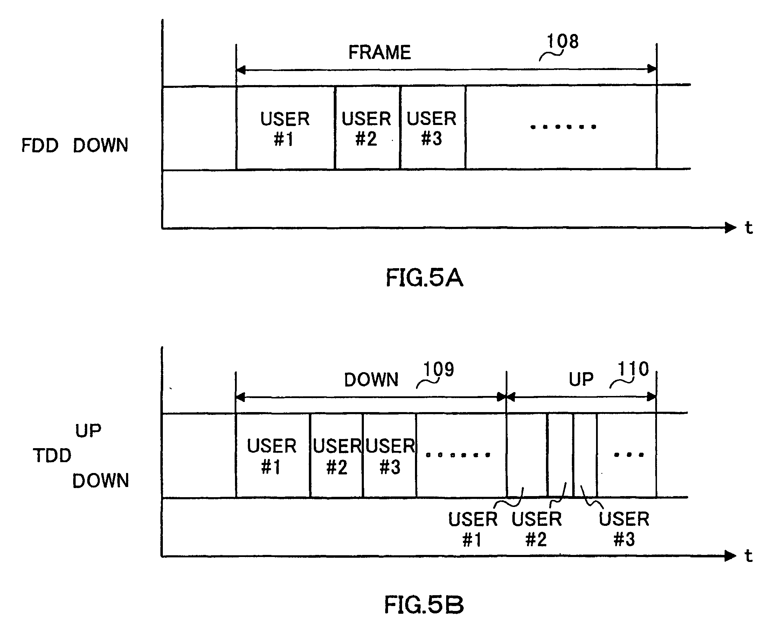

That is to say, in an FDD system, as shown in FIG.5A, downlink signals are assigned to all users (User #1 onward) in a downlink frame 108, whereas in a TDD system, as shown in FIG.5B, a downlink slot 109 and uplink slot 110 are time-multiplexed in the same frequency band, downlink signals are assigned to all users (User #1 onward) in the downlink slot 109, and uplink signals are assigned to all users (User #1 onward) in the uplink slot 110.

Therefore, in a TDD system, asymmetrical transmission can easily be implemented without regard to frequency bandwidth simply by changing the ratio of the length of the downlink slot 109 to the length of the uplink slot 110. Also, in a TDD system, further asymmetry can be achieved by using a different modulation method, frame configuration, channel configuration, and multiplexing method on the uplink and the downlink. FIG.5 is used to explain up/downlink time domain symmetry/asymmetry. In FIG.5, a case is shown, as an example, where the inter-user multiplexing method is time multiplexing, but the inter-user multiplexing method on either the uplink or downlink may be time multiplexing or code multiplexing.

The present inventors arrived at the present invention by considering the above points, and finding that, for a W-CDMA FDD system and TDD system for which standardization is proceeding on the premise of being able to provide the same services, by specializing a TDD system for high-speed packet transmission, combining it with an FDD system, and mainly performing sharing in communication services, it is possible, in a system that includes channels with a high transmission rate, to prevent a decrease in the transmission rate (throughput) at the edge of the cover area, and also to improve spectral efficiency and increase the number of accommodated channels without lowering average throughput.

That is, the theme of the present invention is that, in a radio communication system that has a plurality of systems that include a CDMA-FDD system and CDMA-TDD system, one or other of the CDMA-FDD system and CDMA-TDD system is a system that includes channels with a high transmission rate, and a mobile station selects from the CDMA-FDD system and CDMA-TDD system the system for which the wanted connection is desired, and performs communication with the selected system.

### Brief Description of Drawings

FIG.1 is a drawing for explaining the cover area of a base station;
FIG.2 is a drawing for explaining user assignment in an HDR system;
FIG.3 is a drawing showing frequency bands when an FDD system is used;
FIG.4 is a drawing showing frequency bands when an FDD system and TDD system are used;
FIG. 5A is a drawing showing the frame configuration of an FDD system downlink signal;
FIG. 5B is a drawing showing the frame configurations of a TDD system uplink signal and downlink signal;
FIG. 6 is a drawing showing an outline configuration in a radio communication system according to Embodiment 1 of the present invention;
FIG.7 is a block diagram showing the configuration of a communication terminal apparatus in a radio communication system according to Embodiment 1 of the present invention;
FIG. 8 is a drawing showing another example of an outline configuration in a radio communication system according to Embodiment 1 of the present invention; and
FIG.9 is a block diagram showing the configuration of a base station apparatus in a radio communication system according to Embodiment 2 of the present invention.

### Best Mode for Carrying out the Invention

With reference now to the accompanying drawings, embodiments of the present invention will be explained in detail below.

### (Embodiment 1)

In this embodiment, when both an FDD system and a TDD system are used, a pair of frequency bands (paired bands) are secured in the uplink and downlink in the FDD system and a common frequency band is secured in the uplink and downlink in the TDD system, as shown in FIG.4. That is to say, FDD system #3 secures an uplink frequency band 105 and a downlink frequency band 106 as a pair, and TDD system #4 secures a frequency band 107 for the uplink and downlink. The FDD system and TDD system may each have a plurality of frequency bands.

In this embodiment, a case is described where high-speed packet transmission service is accommodated in a TDD system that implements asymmetrical transmission with the downlink slot length longer than the uplink slot length, speech service or low-speed packet (non-high-speed packet) service is accommodated in an FDD system, the TDD system uses frequency f2, and the FDD system uses frequencies f1 and f3 (paired bands). Here, "high-speed packet" means "packet transmitted at high speed" or "packet with a high transmission rate".

That is, in this embodiment, "a system that includes channels with a high radio transmission rate" is accommodated in a TDD system. In this case, "a system that includes channels with a high radio transmission rate" means a system consisting only of channels with a high radio transmission rate, or a system mainly containing channels with a high radio transmission rate, and includes not only a system that transmits enormous volumes of data at high speed, as in the case of images or music, but also a system in which the volume of data is small but transmission is performed instantaneously (in a short transmission time) using high-speed packets, as in the case of speech.

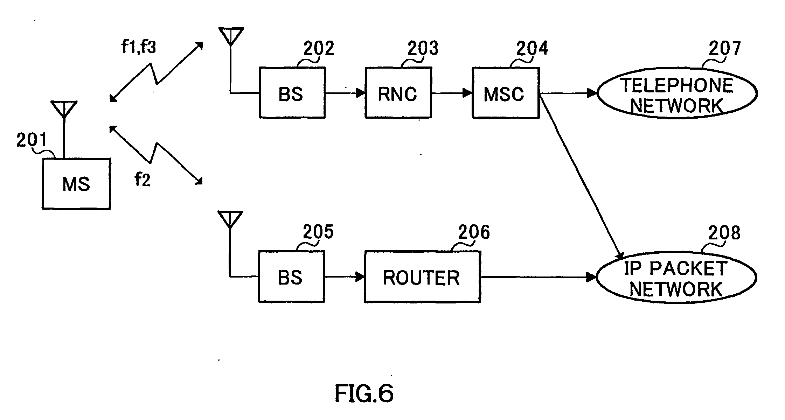

FIG.6 is a drawing showing an outline configuration in a radio communication system according to Embodiment 1 of the present invention. In the radio communication system shown in FIG.6, a speech signal of frequency f1 transmitted from a mobile station (MS) 201 which is a communication terminal is received by a base station (BS) 202 and undergoes predetermined processing, and the obtained received data is sent to a mobile switching station (hereinafter abbreviated to "MSC" (Mobile Switching Center)) 204 via a radio network control station (hereinafter abbreviated to "RNC" (Radio Network Controller)) 203. In the MSC 204, data from a number of base stations is bundled and sent to a telephone network 207. The MSC 204 is also connectedto an IP packet network 208, and transmits an IP packet signal as necessary, generally using tunneling technology, as described later herein. The telephone network 207 may include a PSTN, ISDN, and so forth.

On the other hand, a high-speed packet of frequency f2 transmitted from the mobile station (MS) 201 is received by base station (BS) 205 and undergoes predetermined processing, and the obtained received data is sent to the IP (Internet Protocol) packet network 208 by a router 206.

Thus , one system is connected to a telephone network from the RNC 203 via the MSC 204, and the other system is connected to an IP packet network 208 via a router 206 that has control functions such as radio resource management. Performing connection to the IP packet network via a router eliminates the need for an exchange and enables infrastructure construction and management costs to be reduced, thereby allowing communication charges to be decreased.

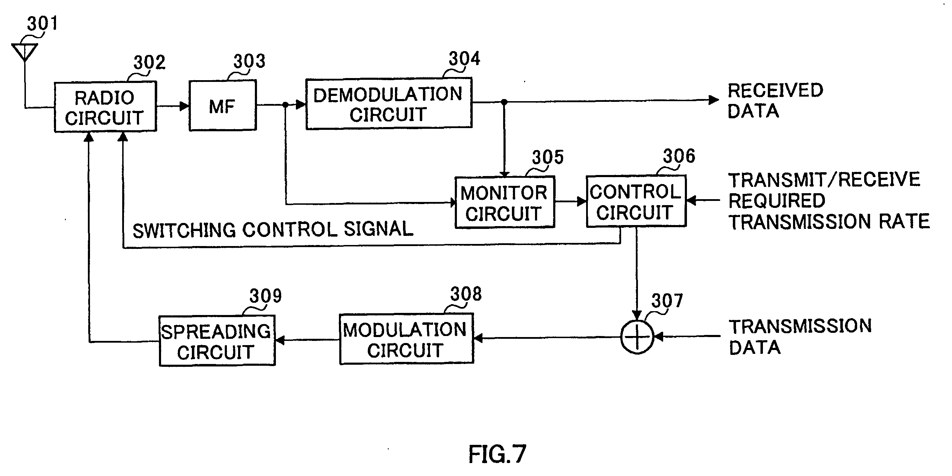

A mobile station in the above-described system has the configuration shown in FIG.7. A mobile station can communicate with a plurality of systems (base stations), and is provided with a plurality of reception sequences, but to simplify the explanation, only one sequence is shown in FIG.7.

A signal received via an antenna 301 undergoes predetermined radio processing (down-conversion, A/D conversion, etc.) by a radio circuit 302. After undergoing radio reception processing, the signal is sent to a matched filter 303, where despreading processing is performed with the spreading code used by the base station.

After undergoing despreading processing, the signal is sent to a demodulation circuit 304 where it undergoes demodulation processing and becomes received data. In addition, the signal that has undergone despreading processing and/or the signal that has undergone demodulation processing is sent to a monitor circuit 305.

The monitor circuit 305 recognizes by means of control signals from base station 202 and base station 205 what kind of services are provided by base station 202 and base station 205, and outputs these control signals to a control circuit 306. The monitor circuit 305 also measures reception quality and speed of movement using signals from the base stations, estimates the propagation path conditions between the mobile station and the base stations, and recognizes approximately what the speed of movement of the mobile station is. The propagation path estimation result and speed of movement information are output to the control circuit 306 as control signals.

Based on control signals from the monitor circuit 305, and transmit/receive required and transmission rate information, the control circuit 306 outputs to an adder 307 control data indicating which system is to be connected to, and also outputs to the radio circuit 302 a switching control signal for switching to the frequency of the system corresponding to the service to be connected to. The adder 307 multiplexes the above-described control data for system connection with transmission data, and outputs the resulting signal to a modulation circuit 308. The modulation circuit 308 performs digital modulation processing on the multiplexed transmission data and control data, and outputs the resulting signal to a spreading circuit 309. The spreading circuit 309 performs spreading processing on the multiplexed transmission data and control data using a predetermined spreading code, and outputs the signal that has undergone spreading to the radio circuit 302.

In the radio circuit 302, predetermined radio transmission processing (D/A conversion, up-conversion, etc.) is carried out on the transmission data and control data. Also, as a switching control signal for switching to the frequency of the system to be connected to is input from the control circuit 306, the radio circuit 302 switches the frequency in accordance with that switching control signal. After undergoing radio transmission processing, the transmission data is transmitted to the base station via the antenna 301.

Next, operations in a radio communication system that has the above configuration will be described.

In FIG.6, the mobile station 201 receives signals from base station 202 and base station 205, and recognizes what kind of services are provided by base station 202 and base station 205 by means of its internal monitor circuit 305. Control signals indicating these base station services are sent to the control circuit 306.

When the mobile station 201 requests high-speed packet transmission, that request is sent to the control circuit 306. Based on the control signals indicating the base station services and the indication of a request for high-speed packet transmission, the control circuit 306 selects base station 205 as the base station to be connected to, and multiplexes a control signal indicating this selection result (to the effect that connection is desired) with transmission data to be sent to base station 205.

As the control circuit 306 has determined that connection should be made to base station 205, it outputs to the radio circuit 302 a switching control signal for switching to system frequency f2 of base station 205. The radio circuit 302 switches to frequency f2 in accordance with the switching control signal.

On receiving a signal transmitted from the mobile station 201, base station 205 shifts to an operation to connect to the mobile station 201 based on control data contained in the signal-that is, data indicating a desire to connect. Then, when base station 205 and the mobile station 201 are connected, high-speed packet transmission is started. When the mobile station 201 receives high-speed packets-when downloading, for example-it receives the high-speed packets from base station 205 via the router 206 from the IP packet network 208.

When the mobile station 201 uses speech service, the relevant request is sent to the control circuit 306. Based on the control signals indicating the base station services and the indication of a request for speech service, the control circuit 306 selects base station 202 as the base station to be connected to, and multiplexes a control signal indicating this selection result (to the effect that connection is desired) with transmission data to be sent to base station 202.

As the control circuit 306 has determined that connection should be made to base station 202, it outputs to the radio circuit 302 a switching control signal for switching to system frequencies f1 and f3 of base station 202. The radio circuit 302 switches to frequencies f1 and f3 in accordance with the switching control signal.

On receiving a signal transmitted from the mobile station 201, base station 202 shifts to an operation to connect to the mobile station 201 based on control data contained in the signal-that is, data indicating a desire to connect. Then, when base station 202 and the mobile station 201 are connected, speech communication is started. When performing speech communication, the mobile station 201 is connected to the telephone network 207 via the RNC 203 and MSC 204.

Thus, in a radio communication system according to this embodiment, high-speed packet transmission is accommodated in a TDD system that has transmission rate asymmetry in the time domain, and speech service is accommodated in an FDD system.

When an FDD system has the same radio frequency band for the uplink and downlink, it basically has approximately the same system capacity on the uplink and downlink, and so, in a case where many asymmetrical transmission channels with a large downlink transmission volume and small uplink transmission volume are accommodated, such as Internet connection or music distribution, for example, the total up/downlink transmission volume is unbalanced, and spectral efficiency is poor.

With a TDD system, on the other hand, the up/downlink system capacity can easily be made asymmetrical by making the up/downlink time ratio (number of slots, etc.) asymmetrical. Consequently, downlink high-speed channels (packets) can be accommodated efficiently.

Therefore, by accommodating downlink high-speed channel (packet) transmission, which is asymmetrical transmission, in a TDD system, and accommodating other transmission in an FDD system, it is possible to improve efficiency in the system. As a result, it is possible to increase the number of accommodated channels without reducing average throughput-that is, to attain a faster transmission rate per channel and achieve an increase in system capacity.

In the above description, a case has been described where asymmetry was provided for the transmission rate in the time domain in a TDD system, but further asymmetry can be achieved in a TDD system by using a different modulation method, frame configuration, channel configuration, and multiplexing method on the uplink and the downlink.

Also, in a TDD system a guard time is provided in order to prevent collisions due to propagation delay between an uplink and downlink. The length of this guard time depends on the cell radius: the greater the cell radius, the longer the guard time required. The reason for this is that, as the cell radius increases the propagation delay between the cell edge and the base station increases, and if the guard time is insufficient in this case, in reception by the base station an uplink signal whose reception is delayed will coincide with the downlink signal transmission timing, and a collision will occur.

As the cell radius increases the guard time must be increased, as explained above, and the overhead ratio (the proportion of the total communication time occupied by a period in which there is not actually a transmit/receive signal) will increase, and transmission efficiency will decrease, accordingly. Therefore a large cell radius is generally considered to be unsuitable for a TDD system. Consequently, a TDD system is suited to microcells or picocells with a comparatively small cell radius.

This guard time is specific to a TDD system, which uses ping-pong transmission, and is not necessary in an FDD system. Therefore, in an FDD system there are no restrictions on the cell radius, which is a guard time related factor, and it is possible to use macrocells which are larger than microcells or picocells.

Therefore, by accommodating speech service in an FDD system in macrocells and accommodating high-speed packet transmission service in a TDD system in microcells with a small cell radius, instead of using the same cover area for speech service and high-speed packet transmission service, it is possible to prevent the decrease in transmission rate (throughput) at cell edges which is a concern with HDR. Also, by accommodating high-speed packet transmission service in microcells, it is possible to suppress interference since propagation distances are shorter. As a result, spectral efficiency improves, and it is possible to increase the number of accommodated channels without reducing average throughput-that is, to attain a faster transmission rate per channel and achieve an increase in system capacity.

Moreover, by accommodating a fast-rate transmission channel in a microcell with a small cell radius, transmission power can be decreased proportionally to the shorter propagation distance. Thus a large-output transmit amplifier is not necessary in a base station, and base station equipment costs can be reduced.

In the above description, a case has been described where a control signal from a base station is used to identify what kind of system that base station is, and the system is switched based on that system-that is to say, so that speech with a real-time requirement and non-real-time low-speed packets are communicated by means of an FDD system, and non-real-time high-speed packets are communicated by means of a TDD system. In the present invention, factors in system switching are not limited to this, and one or other system may be selected and connected according to the speed of movement of a mobile station or the communication environment (propagation path conditions and noise level).

In this case, with regard to speed of movement, a fast-moving mobile station is accommodated in an FDD system in order to minimize the number of handovers between cells, and a slow-moving mobile station is accommodated in a TDD system. At this time, the mobile station measures a Doppler frequency, etc., from the received signal from a base station by means of a monitor circuit, and based on that information selects the system (base station) to be connected to by means of a control circuit.

When a packet transmission service, and in particular an asymmetrical packet transmission service, is accommodated in an FDD system, the total up/downlink transmission volume is unbalanced, and spectral efficiency is poor. It is therefore desirable to impose restrictions on the number of accommodated channels and the maximum transmission speed. In this case, possibilities are limiting the maximum transmission speed irrespective of the number of accommodated channels, or executing control so that comparatively high-speed packet transmission (at 384 kbps, for example) is carried out only when the number of accommodated channels is small, and the maximum transmission speed is reduced (to 64 kbps, for example) as the number of channels increases.

Also, in a service (such as speech) with a real-time requirement, for example, when audio quality is important, a selection is made so that connection is made to an FDD system (circuit switching)-that is, to base station 202-and when it is wished to keep call charges low, a selection is made so that connection is made to a microcell-that is, to base station 205. When speech communication is carried out by means of connection to base station 205, performing IP transmission (VoIP: Voice over IP) is also a possibility.

When the communication environment (propagation path conditions and noise level) is used as a system switching factor, a mobile station for which the communication environment is good is accommodated in a macrocell that has a wide cover area, and a mobile station for which the communication environment is poor is accommodated in a microcell. At this time, the mobile station measures reception quality (SIR, etc.) from the received signal from a base station by means of a monitor circuit, and based on that information selects the system (base station) to be connected to by means of a control circuit.

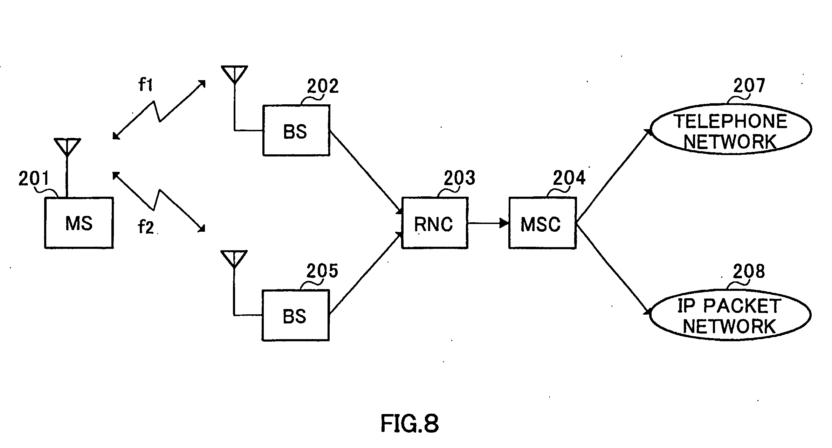

In the above description, a case has been described where an FDD system base station 202 (macrocell) that performs speech service is connected to a telephone network 207 via an RNC 203 and MSC 204, and a TDD system base station 205 (microcell) that performs high-speed packet transmission service is connected to an IP packet network 208 via a router 206. In the present invention a configuration may also be used, as shown in FIG. 8, whereby FDD system base station 202 (macrocell) that performs speech service and TDD system base station 205 (microcell) that performs high-speed packet transmission service are connected to the backbone (telephone network 207 or IP packet network 208) via a common RNC 203 and MSC 204. In this case, too, the same kind of effect as described above can be obtained.

When an IP packet signal is transmitted to the telephone network 207 or IP packet network 208 via an RNC 203 and MSC 204, as shown in FIG. 8, tunneling technology is generally used. That is, a method can be used whereby the IP address of a communication terminal or an IP address that takes account of the mobility of a mobile IP, etc., is looked at, and, instead of performing direct routing from base station 202 or base station 205 through the MSC 204, the connection destination up to the BTS is managed separately as a mobile communication network, a path (local address, node address) is extended independently as a mobile communication network, and a signal from the IP packet network 208 is transferred.

In this embodiment, a case has been described where connection is performed by selecting and switching to a system, but it is not the case that connection of one mobile station is disjunctive, and as long as the system is changed for each service, channels may be connected simultaneously for each system.

That is to say, the system selection result may differ for each service for a single mobile station, and even if a different selection result is produced for each service, so that, for example, an FDD system (base station 202) is selected for speech service and a TDD system (base station 205) is selected for high-speed packet transmission service, it is possible for communication with the respective base stations to be carried out simultaneously for the respective services.

### (Embodiment 2)

In this embodiment, a case is described where communication is performed after communication environment and speed of movement measurement results, and a desire for connection, are reported from a mobile station to one system, and connection is decided based on determination on the base station side.

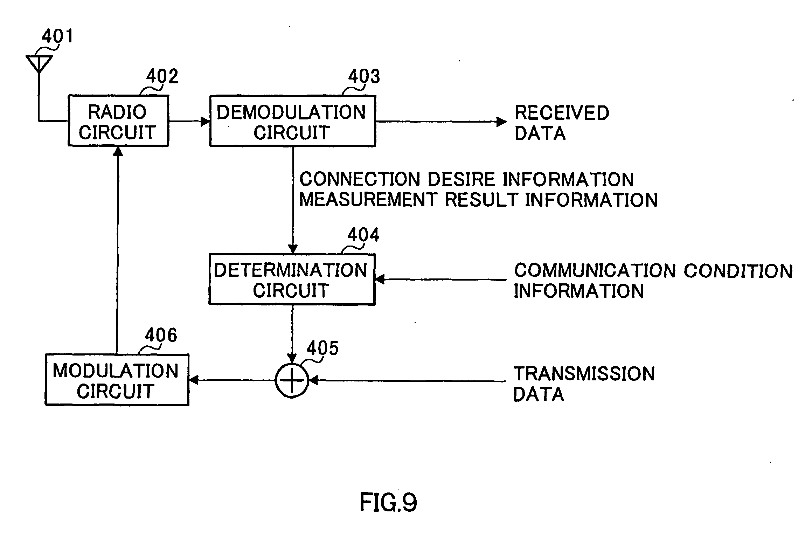

FIG.9 is a block diagram showing the configuration of a base station apparatus in a radio communication system according to Embodiment 2 of the present invention.

First, as described in Embodiment 1 above, a control signal indicating a desire for connection (connection desire information) based on measurements such as individual services, communication environment, and speed of movement, and the results of those measurements, are sent from a mobile station.

A signal including this control signal and these measurement results is received via an antenna 401, and undergoes predetermined radio processing (down-conversion, A/D conversion, etc.) by a radio circuit 402. After undergoing radio reception processing, the signal is sent to a demodulation circuit 403 where it undergoes demodulation processing and becomes received data. In addition, the signal that has undergone demodulation processing is sent to a determination circuit 404.

The determination circuit 404 determines whether or not the mobile station is to be connected based on the connection desire information and measurement result information from the mobile station, together with communication condition information, etc., monitored by the station itself. For example, when a high-speed packet transmission connection request is received from the mobile station, if the communication conditions are poor or the noise level is high, it is determined that high-speed packet transmission cannot be accommodated at present, and control data indicating that connection is not possible is output to an adder 405. If, on the other hand, it is determined that high-speed packet transmission can be accommodated at present, control data indicating that connection is possible is output to the adder 405.

The adder 405 multiplexes the above-described system connection control data with transmission data, and outputs the resulting signal to a modulation circuit 406. The modulation circuit 406 performs digital modulation processing on the multiplexed transmission data and control data, and outputs the resulting signal to the radio circuit 402.

In the radio circuit 402, predetermined radio transmission processing (D/A conversion, up-conversion, etc.) is carried out on the transmission data and control data. After undergoing radio transmission processing, the transmission data is transmitted to the mobile station via the antenna 401.

Thus, a base station apparatus according to this embodiment determines whether or not connection is possible to a mobile station based on connection request information, and communication condition information measured by the station itself, and if the result of that determination is that connection is possible performs communication connection to the mobile station, or if the result of that determination is that connection is not possible notifies the mobile station to that effect. By this means, when a mobile station selects a system and issues a connection request to a base station, the base station determines whether or not connection is possible taking into account various factors such as communication conditions.

In the above description a case has been described where a base station determines whether or not connection is possible, and reports the result of that determination. In the present invention, it is also possible for a base station to determine which system a mobile station should be accommodated in, as well as determining whether or not connection is possible.

In this case, if the apparatus is configured with a common control station (RNC) as shown in FIG.8, which system the mobile station should be accommodated by is determined by the RNC 203 or MSC 204. If the RNC 203 and router 206 are provided separately as shown in FIG.6, an apparatus that determines which system the mobile station should be accommodated by is provided between the RNC 203 (or MSC 204) and router 206, and that apparatus determines which system the mobile station is to be accommodated by and notifies the mobile station of the result of that determination.

The present invention is not limited to above Embodiments 1 and 2, and can be implemented with various modifications. In above Embodiments 1 and 2 a case is described where two systems are included in a radio communication system, but the present invention can also be applied to a case where three or more systems are included in a radio communication system.

Moreover, in the above embodiments, a case is described where a system is determined for which selection is made with regard to speed of movement and communication environment, but this case is only one example, and implementation is also possible with the selection criteria changed as appropriate, with service, speed of movement, and communication environment taken separately or in combination.

A radio communication system of the present invention has a configuration whereby, in a radio communication system that has a plurality of systems including a CDMA-FDD system and a CDMA-TDD system, either the CDMA-FDD system or CDMA-TDD system includes a channel with a high transmission rate, and a mobile station selects a system to which connection is desired from the plurality of systems including a CDMA-FDD system and a CDMA-TDD system, and performs communication with the selected system.

According to this configuration, it is possible, for example, to accommodate downlink high-speed transmission which is asymmetrical transmission in a TDD system, and to accommodate other transmission in an FDD system, thereby enabling spectral efficiency to be improved in the overall system.

A radio communication apparatus of the present invention has a configuration whereby, in the above configuration, the CDMA-FDD system and CDMA-TDD system are controlled by a common control station, and are connected to a telephone network via an exchange.

A radio communication apparatus of the present invention has a configuration whereby, in the above configuration, at least one of the CDMA-FDD system and CDMA-TDD system is connected to an IP packet network via a router.

According to this configuration, by connecting to an IP packet network via an IP packet network apparatus such as a router, the intermediation of an exchange is made unnecessary, and infrastructure construction and management costs can be reduced, thereby enabling communication charges to be decreased.

A radio communication apparatus of the present invention has a configuration whereby, in the above configuration, it is possible to perform communication with the CDMA-FDD system and CDMA-TDD system simultaneously on different channels.

According to this configuration, it is possible for communication with respective base stations to be carried out simultaneously for respective services.

A radio communication apparatus of the present invention has a configuration whereby, in the above configuration, a mobile station selects a system taking into account at least one item chosen from a group consisting of service, communication environment, and speed of movement of the station itself, in the CDMA-FDD system and CDMA-TDD system.

According to this configuration, it is possible to select the most appropriate system according to service, etc., and it is thus possible to perform communication, and in particular downlink high-speed data communication, more efficiently in the system.

A radio communication system of the present invention has a configuration comprising a monitoring section that monitors downlink signals from each system in a radio communication system that has a plurality of systems including a CDMA-FDD system and CDMA-TDD system , a selecting section that selects the system to be connected to based on information monitored by the monitoring section and a connection request from the station itself, and a communication connecting section that performs communication connection to the base station of the system selected by the selecting section.

According to this configuration, it is possible to select the most appropriate system, and it is thus possible to perform communication more efficiently in the system.

A radio communication apparatus of the present invention has a configuration whereby, in the above configuration, the selecting section selects a system taking into account at least one item chosen from a group consisting of service, communication environment, and speed of movement of the station itself, in the CDMA-FDD system and CDMA-TDD system.

According to this configuration, it is possible to select the most appropriate system according to service, etc., and it is thus possible to perform communication, and in particular downlink high-speed data communication, more efficiently in the system.

A base station apparatus of the present invention has a configuration comprising a determining section that determines, based on connection request information from a communication terminal apparatus with the above configuration and communication condition information measured by the station itself, whether or not connection to the communication terminal apparatus is possible, and a communication connecting section that, when the result of determination by the determining section is that connection is possible performs communication connection to the communication terminal apparatus, and, when the result of determination by the determining section is that connection is not possible notifies the communication terminal apparatus that connection is not possible.

According to this configuration, when a mobile station selects a system and issues a connection request to a base station, the base station determines whether or not connection is possible taking into account various factors such as communication conditions.

As described above, a radio communication system of the present invention has a plurality of systems including a CDMA-FDD system and CDMA-TDD system, and a mobile station selects a system to which wanted connection is desired from the systems, and performs communication with the selected system, so that communication is performed efficiently on a downlink with high-speed packets. As a result, it is possible to prevent a decrease in the transmission rate (throughput) at the edge of the cover area, and also to improve spectral efficiency by suppressing interference, and increase the number of accommodated channels without lowering average throughput.

This application is based on Japanese Patent Application No.2000-169442 filed on June 6, 2000, entire content of which is expressly incorporated by reference herein.

### Industrial Applicability

The present invention is applicable to a communication terminal apparatus used in a digital radio communication system.

## Claims

1. A radio communication system whereby, in a radio communication system that has a plurality of systems including a CDMA-FDD system and a CDMA-TDD system, one or other of said CDMA-FDD system and said CDMA-TDD system includes a channel with a high transmission rate, and a mobile station selects a system to which connection is desired from said plurality of systems including a CDMA-FDD system and a CDMA-TDD system, and performs communication with the selected system.

2. The radio communication system according to claim 1, wherein said CDMA-FDD system and CDMA-TDD system are controlled by a common control station and are connected to a telephone network via an exchange.

3. The radio communication system according to claim 1, wherein at least one system of said CDMA-FDD system and CDMA-TDD system is connected to an IP packet network via a router.

4. The radio communication system according to claim 1, wherein it is possible to perform communication with said CDMA-FDD system and CDMA-TDD system simultaneously on different channels.

5. The radio communication system according to claim 1, wherein said mobile station selects a system taking into account at least one item chosen from a group consisting of service, communication environment, and speed of movement of the station itself, in said CDMA-FDD system and CDMA-TDD system.

6. A communication terminal apparatus comprising:
monitoring means for monitoring downlink signals from each system in a radio communication system that has a plurality of systems including a CDMA-FDD system and a CDMA-TDD system;
selecting means for selecting a system to be connected to based on information monitored by said monitoring means and a connection request from the station itself; and
communication connecting means for performing communication connection to a base station of a system selected by said selecting means.

7. The communication terminal apparatus according to claim 6, wherein said selecting means selects a system taking into account at least one item chosen from a group consisting of service, communication environment, and speed of movement of the station itself, in said CDMA-FDD system and CDMA-TDD system.

8. A base station apparatus comprising:
determining means for determining, based on connection request information from a communication terminal apparatus and communication condition information measured by the station itself, whether or not connection to said communication terminal apparatus is possible; and
communication connecting means for, when a result of determination by said determining means is that connection is possible, performing communication connection to said communication terminal apparatus, and, when a result of determination by said determining means is that connection is not possible, notifying said communication terminal apparatus that connection is not possible;
wherein said communication terminal apparatus comprises:
monitoring means for monitoring downlink signals from each system in a radio communication system that has a plurality of systems including a CDMA-FDD system and a CDMA-TDD system;
selecting means for selecting a system to be connected to based on information monitored by said monitoring means and a connection request from the station itself; and
communication connecting means for performing communication connection to a base station of a system selected by said selecting means.
